(19) Europäisches Patentamt
European Patent Office
Office européen des brevets

(11) EP 1 055 721 A2

(12) # EUROPEAN PATENT APPLICATION

(43) Date of publication:
**29.11.2000 Bulletin 2000/48**

(51) Int. Cl.$^7$: **C09K 19/38**

(21) Application number: **00111412.3**

(22) Date of filing: **26.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **27.05.1999 JP 14790099**

(71) Applicant:
**NITTO DENKO CORPORATION**
**Osaka (JP)**

(72) Inventors:
- **Yoshioka, Masahiro,**
  **Nitto Denko Corporation**
  **Ibaraki-shi, Osaka (JP)**
- **Nakano Shusaku,**
  **Nitto Denko Corporation**
  **Ibaraki-shi, Osaka (JP)**
- **Inoue, Kyoko,**
  **Nitto Denko Corporation**
  **Ibaraki-shi, Osaka (JP)**
- **Nakanishi, Sadahiro,**
  **Nitto Denko Corporation**
  **Ibaraki-shi, Osaka (JP)**
- **Mochizuki, Amane,**
  **Nitto Denko Corporation**
  **Ibaraki-shi, Osaka (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Liquid crystal polymer composition, oriented film and process for producing the film**

(57) A liquid crystal polymer composition, a highly heat-resistant oriented film and a process for producing the oriented film are disclosed. The liquid crystal polymer composition contains a liquid crystal polymer producible through conventional copolymerization and from which a large film can be easily and efficiently produced by applying a solution thereof and a highly heat-resistant film of the monodomain orientation type can be formed by crosslinking the polymer in the film under practical conditions. The highly heat-resistant oriented film is obtained by orienting the liquid crystal polymer composition and crosslinking the polymer. The liquid crystal polymer composition comprises a side-chain type cholesteric liquid crystal polymer having as repeating units a segment having an unsaturated carbon ring as a crosslinkable side-chain terminal group, a segment having an optically active group and a segment imparting the property of undergoing nematic orientation; and a low molecular weight crosslinking agent having one or more (meth)acryloyl groups in the molecule.



Printed by Xerox (UK) Business Services
2.16.7 (HRS)/3.6

## Description

### FIELD OF THE INVENTION

The present invention relates to a liquid crystal polymer composition comprising a side-chain type cholesteric liquid crystal polymer having at least one unsaturated carbon ring as a crosslinkable side-chain terminal group and a low molecular weight crosslinking agent having one or more (meth)acryloyl groups. The present invention further relates to an oriented film which is obtained by orienting the liquid crystal polymer composition and then crosslinking the liquid crystal polymer, has excellent heat resistance, and shows circular dichroism useful in applications such as optical films. The present invention also relates to a process for producing the oriented film.

### BACKGROUND OF THE INVENTION

Various optical films comprising oriented films of a cholesteric liquid crystal polymer have hitherto been proposed and are expected to be used in applications such as liquid crystal displays. However, these optical films have a problem that their heat resistance, which depends on the glass transition temperature of the cholesteric liquid crystal polymer, is poor because they are formed by applying a solution of the liquid crystal polymer on an alignment film, drying the solution, heating the resultant coating film to a temperature not lower than the glass transition temperature of the polymer to orient it, and then cooling the coating film.

The reason for the poor heat resistance is as follows. The oriented films comprising a cholesteric liquid crystal polymer retain the Grandjean arrangement at temperatures not higher than the temperature at which the polymer comes to have an isotropic phase, when no stress is imposed thereon. Under a stress, however, the arrangement of molecules is disordered at around the glass transition temperature and, hence, the oriented films suffer a change in optical properties. In actual use, it is rather usual for oriented films to suffer a stress, for example, as a result of a dimensional change due to a temperature change under practical use conditions, as in the case where an oriented film is bonded, for example, to a liquid crystal display through a pressure-sensitive adhesive layer together with a polarizing film, a retardation film or the like. For example, in the case of an oriented film bonded to a polarizing film through a pressure-sensitive adhesive layer, a shrinkage stress is imposed thereon when the polarizing film undergoes a dimensional change due to a temperature change.

A possible measure for obtaining an oriented film having improved heat resistance is to use a liquid crystal polymer having a high glass transition temperature. However, since use of such a liquid crystal polymer necessitates higher temperature in forming an oriented film, the alignment film and the substrate therefor are also required to have higher heat resistance. Namely, the measure is disadvantageous in limitations on usable substrates and in profitability.

On the other hand, JP-A-4-12322 (the term "JP-A" as used herein means an "unexamined published Japanese patent application") discloses a technique for improving heat resistance which comprises orienting a cholesteric liquid crystal polymer having crosslinkable groups, e.g., acryloyl groups, at side-chain terminals and then crosslinking the polymer. However, this technique, in which improved heat resistance is obtained with such a cholesteric liquid crystal polymer and an initiator alone through crosslinking, is less suitable for practical use because irradiation with a larger amount of electromagnetic wave such as ultraviolet is necessary and heating at a high temperature should be conducted simultaneously with the irradiation so as to enhance the flowability of the liquid crystal. In addition, the incorporation of (meth)acryloyl groups as crosslinkable groups into side chains not only usually necessitates a polymer reaction which is difficult to control quantitatively, but also results in a multistage reaction for synthesizing the liquid crystal polymer. Consequently, it is difficult to maintain stable quality and this technique is disadvantageous also from the standpoint of production cost.

There may be a technique in which a low molecular weight compound having one or more (meth)acryloyl groups is added to a cholesteric liquid crystal polymer having no crosslinkable groups at side-chain terminals. This technique, however, is insufficient in the improvement of heat resistance, because the addition of the low molecular weight compound results in a decrease in heat resistance and, hence, the crosslinking is effective only in barely maintaining the heat resistance of the liquid crystal polymer itself.

There also is a technique in which a flowable layer comprising a low molecular weight, polymerizable, cholesteric liquid crystal compound is interposed between two substrates and then treated with ultraviolet irradiation or the like to polymerize the compound, thereby obtaining an oriented film. This technique, however, has a problem that it has a poor production efficiency although effective in improving heat resistance. Such techniques for polymerizing a low molecular weight, polymerizable liquid crystal compound with ultraviolet irradiation or the like further have a problem that a large oriented film is difficult to obtain.

SUMMARY OF THE INVENTION

Accordingly, one object of the present invention is to provide a liquid crystal polymer composition which contains a liquid crystal polymer producible through ordinary copolymerization and from which a large film can be easily and efficiently produced by applying a solution thereof and a highly heat-resistant film of the monodomain orientation type can be formed by crosslinking the polymer in the film under practical conditions.
Another object of the present invention is to provide a highly heat-resistant oriented film obtained by orienting the liquid crystal polymer composition and then crosslinking the polymer.
Still another object of the present invention is to provide a process for producing the oriented film.
As a result of intensive investigations on the structures of liquid crystal polymers and on additives in order to accomplish the above objects, it has been found that the objects can be accomplished by mixing a side-chain type cholesteric liquid crystal polymer having at least one unsaturated carbon ring as a crosslinkable side-chain terminal group with a low molecular weight crosslinking agent having one or more (meth)acryloyl groups. The invention has been achieved based on this finding.
The present invention provides a liquid crystal polymer composition comprising:

a side-chain type cholesteric liquid crystal polymer having as repeating units a segment represented by the chemical formula (I) which will be described later, a segment having an optically active group and a segment imparting the nematic orientation property; and
a low molecular weight crosslinking agent having one or more (meth)acryloyl groups in the molecule.

The liquid crystal polymer composition according to the present invention has the following advantages. The liquid crystal polymer having at least one crosslinkable group at a side-chain terminal can be synthesized by merely polymerizing monomers for constituting the respective segments. The liquid crystal polymer can be oriented by preparing a solution of the polymer, applying and drying the solution, heating the resulting coating film to a temperature not lower than the glass transition temperature of the polymer, and then cooling the coating film. Furthermore, the oriented layer can be made to have improved heat resistance, without disordering the orientation, by crosslinking the liquid crystal polymer under practical conditions with the low molecular weight crosslinking agent containing one or more (meth)acryloyl groups. Consequently, not only an orientation treatment can be conducted at low temperature as in the orientation of conventional cholesteric liquid crystal polymers, but also a large film of the monodomain orientation type having excellent heat resistance can be produced easily and efficiently. In addition, the low molecular weight crosslinking agent is characterized by causing almost no coloration.
In chemical formula (I), the organic group A is preferably an organic group represented by the chemical formula $Z^1(CH_2)_YR^2Z^2$ wherein $Z^1$ and $Z^2$ may be the same or different and each is one member selected from the group consisting of -COO-, -O-, -OCO-and $-(CH_2)_K-$ (wherein K is an integer of 0 to 6); Y is an integer of 0 to 12; and $R^2$ is an organic group represented by the chemical formula (II) which will be given later); the organic group B is preferably a para-substituted cyclic organic group; and the organic group D is preferably an organic group represented by the chemical formula $Z^3(CH_2)_XZ^4$ wherein when X=0, $Z^3$ is $-(CH_2)_L-$ (wherein L is an integer of 0 to 6) and $Z^4$ is -COO-, -O-, -OCO- or $-(CH_2)_N-$(wherein N is an integer of 0 to 6); and when $1 \leq X \leq 10$, $Z^3$ and $Z^4$ may be the same or different and each is -COO-, -O-, -OCO- or $-(CH_2)_N-$ (wherein N is an integer of 0 to 6)). Such a combination of organic groups is effective in enabling the side-chain type cholesteric liquid crystal polymer to satisfactorily retain the property of being oriented.
The present invention further provides an oriented film formed from the liquid crystal polymer composition described above, wherein the side-chain type cholesteric liquid crystal polymer contained in the composition has been crosslinked with the low molecular weight crosslinking agent while retaining monodomain orientation. The oriented film of the present invention can be produced easily and efficiently even when it has a large area. This film can be of the monodomain orientation type having excellent heat resistance.
The present invention also provides a process for producing an oriented film which comprises orienting the liquid crystal polymer composition described above and then crosslinking the liquid crystal polymer by at least one of electromagnetic irradiation and heating. According to the process of the present invention, a large film can be easily and efficiently produced by applying a solution of the liquid crystal polymer, and a highly heat-resistant film of the monodomain orientation type can be formed by crosslinking the polymer under practical conditions.

DETAILED DESCRIPTION OF THE INVENTION

The present invention is described in detail below.
The side-chain type cholesteric liquid crystal polymer used in the present invention has, as repeating units, a segment represented by the following chemical formula (I), a segment having an optically active group and a segment

imparting the nematic orientation property:

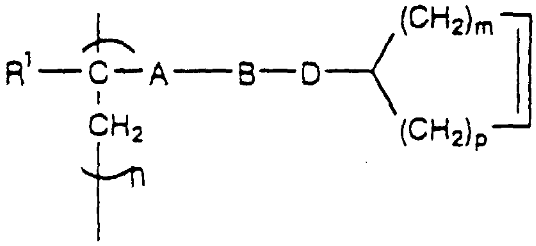

(I)

wherein $R^1$ is hydrogen atom or a methyl group; A, B and D each is an organic group; $1 \leq n \leq 100$; and $0 \leq m+p \leq 10$ .

In chemical formula (I), there are no particular limitations on A, B and D so long as only the reactivity of the crosslinkable group at the side-chain terminal is taken in account. However, the following groups are preferred from the standpoint of the suitability for orientation of the side-chain type cholesteric liquid crystal polymer and from other standpoints.

The organic group A is preferably an organic group represented by the chemical formula:

$$Z^1(CH_2)_YR^2Z^2$$

wherein $Z^1$ and $Z^2$ may be the same or different and each is one member selected from the group consisting of -COO-, -O-, -OCO-and $-(CH_2)_K-$ (wherein K is an integer of 0 to 6); Y is an integer of 0 to 12; and $R^2$ is an organic group represented by the following chemical formula (II):

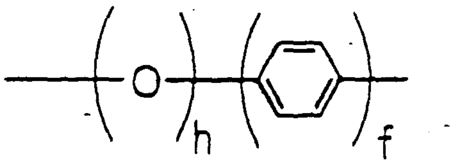

(II)

wherein h is 0 or 1 when Y=0 or $1 \leq Y \leq 12$, respectively; and f is 1 or 2.

The organic group B is preferably a para-substituted cyclic organic group. Examples thereof include the following organic groups:

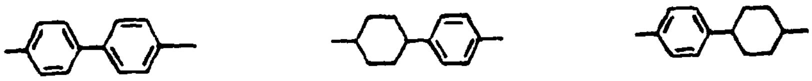
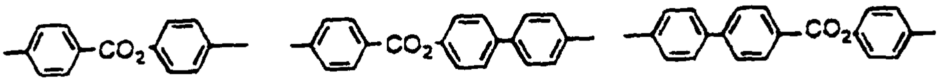
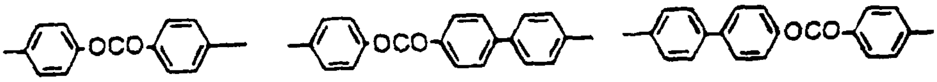
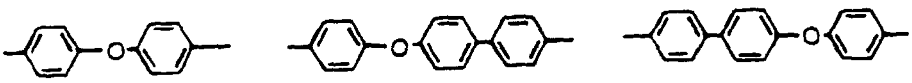
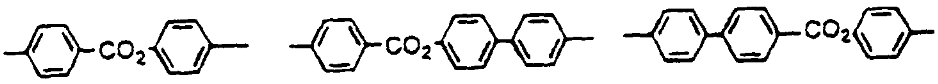
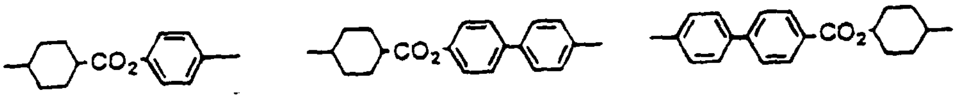
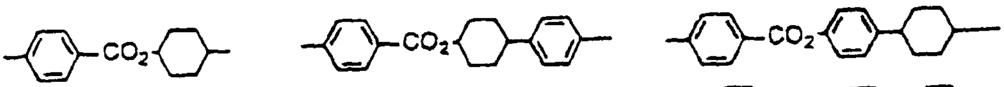
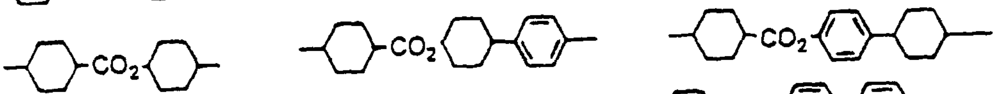
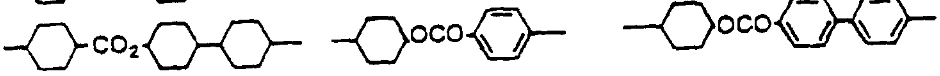
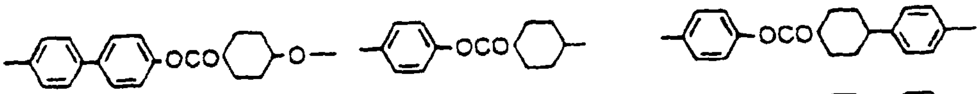
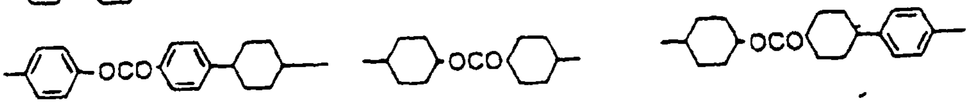
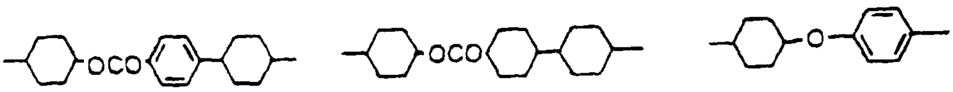
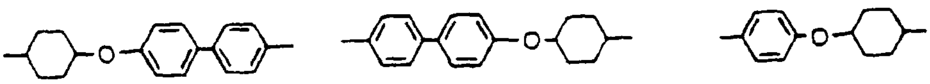
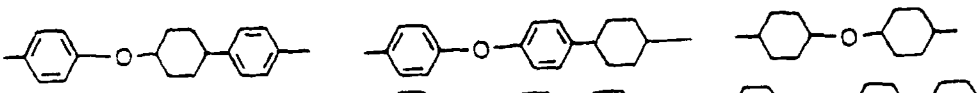
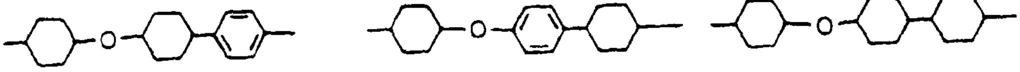
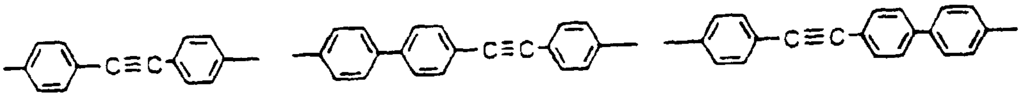

Of the organic groups represented by the above chemical formulae, the organic groups represented by the following chemical formulae are particularly preferable.

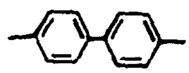
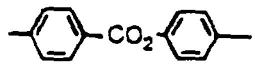
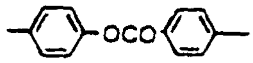
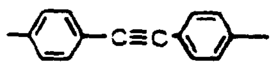

The organic group D is preferably an organic group represented by the chemical formula:

$$Z^3(CH_2)_XZ^4$$

wherein when X=0, $Z^3$ is $-(CH_2)_L-$ (wherein L is an integer of 0 to 6) and $Z^4$ is -COO-, -O-, -OCO- or $-(CH_2)_N-$ (wherein N is an integer of 0 to 6); and when $1 \leq X \leq 10$, $Z^3$ and $Z^4$ may be the same or different and each is -COO-, -O-, -OCO- or $-(CH_2)_N-$ (wherein N is an integer of 0 to 6)).

The side-chain type cholesteric liquid crystal polymer for use in the present invention can be synthesized by any desired method. However, a preferred method is to copolymerize separately synthesized monomers because the proportions of the segments can be easily regulated in this method.

Examples of methods for synthesizing, for example, a cholesteric liquid crystal polymer containing terminal cyclohexenyl groups which is represented by the formula (a3) shown below include a method shown in the following reaction scheme:

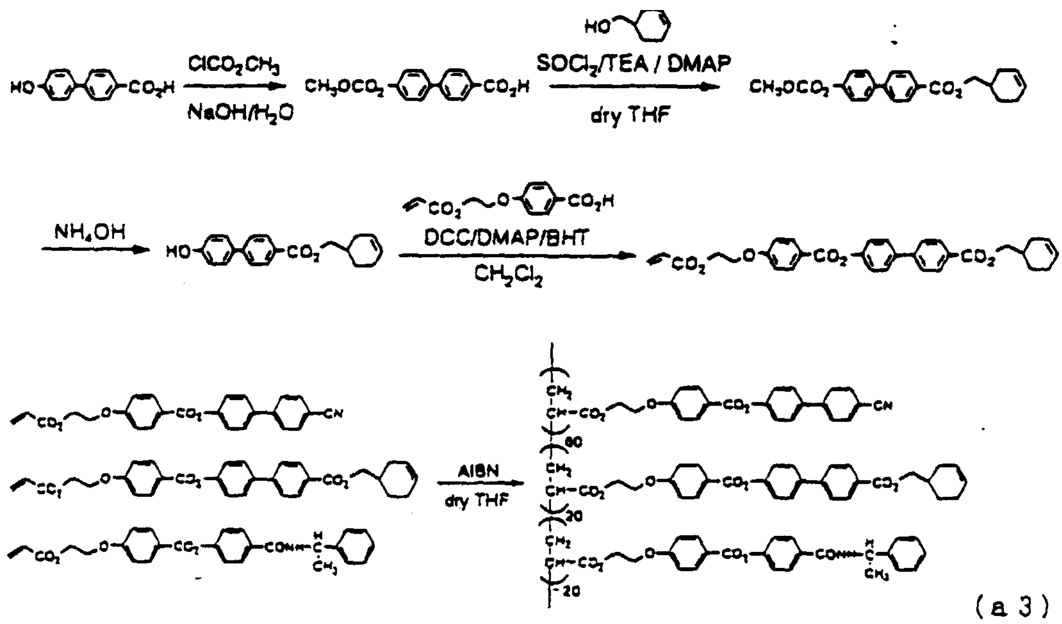


(a 3)

Specifically, the method shown above can be carried out in the following manner. First, 4-(4'-hydroxyphenyl)benzoic acid is added to an aqueous sodium hydroxide solution together with methyl chlorocarbonate. The resulting mixture is stirred at room temperature to protect the hydroxyl group of the benzoic acid derivative. This benzoic acid derivative is reacted with 1-hydroxymethyl-3-cyclohexene to incorporate a cyclohexenyl group. Thereafter, the derivative is heated in 25% ammonia water/tetrahydrofuran (1/10) under reflux to eliminate the protective group. This benzoic acid derivative is esterified with 4-(2-propenoyloxyethoxy)benzoic acid with the aid of dimethylaminopyridine as a catalyst and dicyclohexylcarbodiimide. Thus, a monomer containing a cyclohexenyl group can be obtained. Other monomers which each has a crosslinkable group and corresponds to the segment represented by the chemical formula (I) can be synthesized in the same manner.

The cyclohexenyl-containing monomer obtained above is heated together with a monomer giving a nematic liquid crystal and a monomer containing an optically active group in THF under reflux for 4 hours to copolymerize those monomers. The resulting reaction mixture is poured into methanol to cause precipitation, whereby the objective cholesteric liquid crystal polymer (a3) having terminal cyclohexenyl groups can be obtained.

Examples of the segment represented by the chemical formula (I) should not be construed as being limited to that shown in the formula (a3). Monomers corresponding to the chemical formula (I) may be used alone, or two or more such monomers may be copolymerized. Although the liquid crystal polymer represented by the formula (a3) is shown as a block copolymer for the sake of convenience, the cholesteric liquid crystal polymer for use in the present invention may be a random or another copolymer besides being a block copolymer.

In the liquid crystal polymer, the proportion of the segment represented by the chemical formula (3) is preferably 3 mol% or larger, because too small proportion thereof results in reduced crosslinkability and this leads to insufficient heat resistance. On the other hand, too large proportion thereof is undesirable in that cholesteric liquid crystal property and suitability for orientation tend to be impaired. Consequently, the proportion of the segment represented by the chemical formula (I) is more preferably from 5 to 30 mol%.

Monomers corresponding to the segment imparting the nematic orientation property may be used alone. Alternatively, two or more of these monomers may be copolymerized. Examples of the monomers include monomers constituted of a (meth)acryloyl group and, bonded thereto through a spacer, a mesogen comprising, e.g., a para-substituted cyclic compound. Examples of the cyclic compound include ones having a para-substituted, aromatic or cyclohexyl unit, such as the azomethine, azo, azoxy, ester, tolan, phenyl, biphenyl, phenylcyclohexyl or bicyclohexane type.

In the para-substituted cyclic compound, the terminal substituent in the para-position may be an appropriate substituent such as a cyano, alkyl or alkoxy group or a halogen atom. The spacer connecting the (meth)acryloyl group to the mesogen is not particularly limited as long as it is flexible. Examples thereof include methylene chains, $-(CH_2)_n-$, and oxyethylene chains, $-(CH_2CH_2O)_m-$. The number of repetitions of the structural unit constituting the spacer is suitably determined according to the chemical structure of the mesogen, etc. In general, n in methylene chains is from 0 to 20, preferably from 2 to 12, and m in oxyethylene chains is from 0 to 10, preferably from 1 to 3.

The proportion of the segment imparting the nematic orientation property is preferably from 50 to 90 mol%, more preferably from 65 to 85 mol%. This is because too small proportion thereof results in insufficient nematic orientation, while too large proportion thereof results in relatively too small amount of the other segments.

The cyanobiphenyl-terminated monomer used for constituting the cyanobiphenyl-terminated segment shown in the formula (a3) can be synthesized in the following manner. Ethylene chlorohydrin and 4-hydroxybenzoic acid are heated under reflux in an aqueous alkali solution using potassium iodide as a catalyst to obtain a hydroxycarboxylic acid. This acid is subjected to dehydration reaction with acrylic acid to synthesize 4-(2-propenoyloxyethoxy)benzoic acid. This benzoic acid derivative is esterified with 4-cyano-4'-hydroxybiphenyl with the aid of dimethylaminopyridine as a catalyst and dicyclohexylcarbodiimide to synthesize the objective monomer.

Monomers corresponding to the segment having an optically active group may be used alone. Alternatively, two or more of these monomers may be copolymerized. These monomers may have any structure which contains an optically active group and is used for general cholesteric liquid crystal polymers. However, preferred structures have a high helical twisting power and do not disorder the orientation of the liquid crystal polymer. Preferred examples of such structures are represented by the following chemical formula (a4):

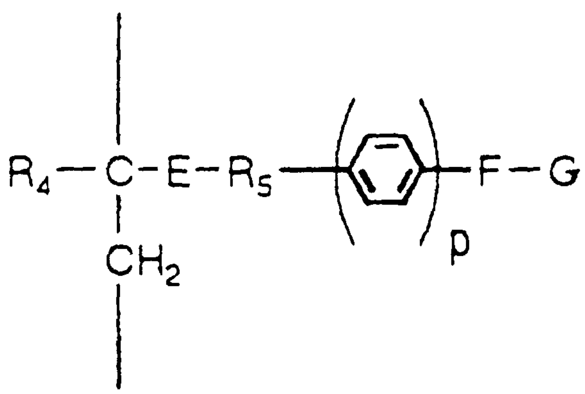

wherein $R_4$ is -H or $-CH_3$; E is -COO-, -O-, -OCO- or $-(CH_2)_i$ (wherein i is an integer of 0 to 6); $R_5$ is a group represented by the following formula:

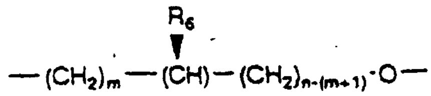

or

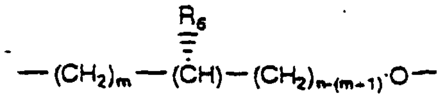

wherein $R_6$ is H or $CH_3$, and n and m satisfy the relationships $1 \leq n \leq 6$, $0 \leq m \leq 5$ and $n \geq m+1$ ); P is 1 or 2; F is -COO-, -O- or -OCO-; and G is any of the following structures:

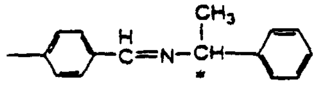

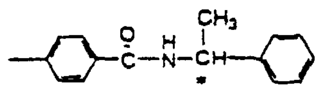

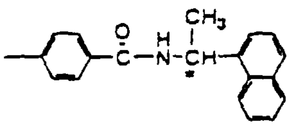

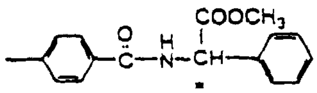

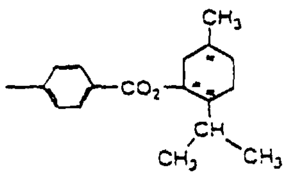

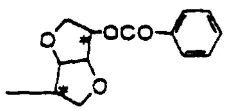

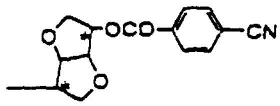

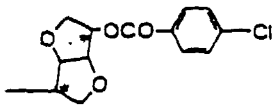

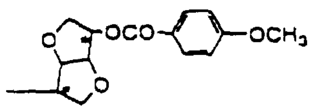

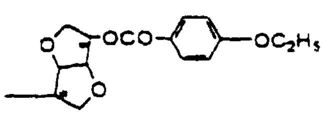

The proportion of the segment having an optically active group is preferably from 1 to 80 mol%, more preferably from 2 to 40 mol%. This is because too small proportion thereof results in insufficient cholesteric liquid crystal property, while too large proportion thereof results in a possibility that the liquid crystal polymer may have poor suitability for orientation.

The monomer used for constituting the segment having an optically active group represented by the formula (a3) can be synthesized by synthesizing 4-(2-propenoyloxyethoxy)benzoic acid in the same manner as described above, forming an amide from this benzoic acid derivative, p-hydroxybenzoic acid and (S)-phenylethylamine, and then esterifying the amide.

The molecular weight of the side-chain type cholesteric liquid crystal polymer is preferably from 2,000 to 100,000, more preferably from 2,500 to 50,000, in terms of weight average molecular weight. This is because too low molecular weight thereof results in poor film-forming properties. On the other hand, if the molecular weight of the polymer is too high, the polymer as a liquid crystal shows poor suitability for orientation, in particular, for monodomain orientation with an alignment film formed through rubbing, so that a uniformly oriented state is difficult to form.

The side-chain type cholesteric liquid crystal polymer, which has a segment represented by the chemical formula (I), a segment having an optically active group and a segment imparting the nematic orientation property as repeating units as described above, can be suitably synthesized according to the method described above while using suitable monomers to be incorporated.

For example, ordinary acrylic monomer polymerization methods such as radical, cationic and anionic polymerization methods can be used in preparing the liquid crystal polymer. Where radical polymerization is used, various

polymerization initiators can be used. However, preferred initiators for radical polymerization are ones which decompose at a moderate temperature, such as azobisisobutyronitrile and benzoyl peroxide.

One side-chain type cholesteric liquid crystal polymer or a combination of two or more such liquid crystal polymers can be contained in the liquid crystal polymer composition of the present invention. Furthermore, one low molecular weight crosslinking agent having one or more (meth)acryloyl groups in the molecule or a combination of two or more such crosslinking agents can be contained in the composition.

The process for producing an oriented film according to the present invention comprises orienting the liquid crystal polymer composition and then crosslinking the liquid crystal polymer by at least one of electromagnetic irradiation and heating. In this process for forming an oriented film, a conventional orientation treatment may be conducted. For example, a method can be used in which a solution of the liquid crystal polymer composition comprising the liquid crystal polymer and the low molecular weight crosslinking agent is spread on an alignment surface and dried, and the resulting coating film is heated to form an oriented layer which is then subjected to crosslinking.

The liquid crystal polymer composition used for forming an oriented film is a mixture of one or more side-chain type cholesteric liquid crystal polymers described above with one or more low molecular weight crosslinking agents having one or more (meth)acryloyl groups in the molecule. The low molecular weight crosslinking agents having one or more (meth)acryloyl groups in the molecule may in themselves be liquid crystal or not. Although any low molecular weight crosslinking agent having one or more (meth)acryloyl groups can be used regardless of structure or molecular weight, it is desirable to use a crosslinking agent which does not disorder the orientation of the liquid crystal polymer. Preferred are ones which show liquid crystal property.

Examples of the low molecular weight crosslinking agents showing liquid crystal property include compounds represented by the following formula:

$$H_2C{=}CH{-}CO_2{-}\!\left(CH_2\right)_g\!{-}O{-}A'{-}X^4{-}B'{-}X^5{-}D'{-}O{-}\!\left(CH_2\right)_h\!{-}O_2C{-}CH{=}CH_2$$

wherein A' and D' each independently represents a 1,4-phenylene or 1,4-cyclohexylene group; B' represents a 1,4-phenylene, 1,4-cyclohexylene, 4,4'-biphenylene or 4,4'-bicyclohexylene group; $X^4$ and $X^5$ each independently represents -COO-, -OCO- or -O-; and g and h each independently represents an integer of 2 to 6.

If the amount of the low molecular weight crosslinking agent added is too small, crosslinking after orientation is difficult to occur and this may result in insufficient heat resistance. If the amount thereof exceeds 100 parts by weight per 100 parts by weight of the liquid crystal polymer, the crosslinking agent tends to inhibit the orientation of the liquid crystal polymer, for example, because part of the crosslinking agent may precipitate during the orientation treatment. Consequently, the proportion of the low molecular weight crosslinking agent incorporated in the composition is preferably from 1 to 70 parts by weight, more preferably from 5 to 40 parts by weight, per 100 parts by weight of the side-chain type cholesteric liquid crystal polymer.

An appropriate solvent in which the liquid crystal polymer and the low molecular weight crosslinking agent are soluble can be used in preparing a solution of the liquid crystal polymer without particular limitations. Examples thereof include 1,1,2,2-tetrachloroethane, cyclohexanone, methylene chloride, chloroform and tetrahydrofuran. These solvents may be used alone or as mixtures of two or more thereof. The liquid crystal polymer composition of the invention includes ones containing one or more of such solvents. It further includes ones containing one or more additives such as an initiator and a leveling agent.

For spreading the solution of a liquid crystal polymer mixture, for example, a method can be used in which the solution is thinly spread by an appropriate technique such as spin coating, roll coating, flow coating, printing, dip coating or casting and the resulting coating film is dried to remove the solvent.

The orientation treated surface can be any conventional surface used for the orientation of low molecular weight liquid crystal compounds. Examples thereof include ones obtained by forming a thin film of a polyimide, poly(vinyl alcohol) or the like on a substrate and rubbing the film with a rayon cloth, ones obtained by the oblique vapor deposition of silicon oxide on a substrate and surfaces of stretched films. Substrates which withstand the heat treatment for orienting the liquid crystal polymer can appropriately be used. Examples of the substrates include glass plates, polymer sheets, retardation films and polarizing films.

The heat treatment for orienting the spread layer formed from the solution of a liquid crystal polymer mixture can be accomplished by heating the layer to a temperature in the range of from the glass transition point of the liquid crystal polymer to below the temperature at which the polymer comes into an isotropic molten state. There are no particular limitations on conditions for the cooling for fixing the oriented state. In general, however, natural cooling is employed because the heat treatment can usually be conducted at 300°C or lower.

The spread layer which has undergone the orientation treatment is subjected to a crosslinking treatment to

crosslink the oriented liquid crystal polymer. This crosslinking treatment can be conducted by one or both of electromagnetic irradiation and heating. Although an appropriate electromagnetic wave such as ultraviolet or electron beams may be used, electron beams are especially preferred because use thereof does not necessitate addition of an initiator and exerts little influence on initial orientation. The wavelength of the electromagnetic wave and the irradiation dose therefor can be suitably determined. However, in the case where ultraviolet is used, ultraviolet rays having a wavelength longer than 300 nm are preferred because the liquid crystal polymer does not absorb these ultraviolet rays. In the case where electron beams are used, the irradiation dose is preferably about from 1 to 200 Mrad although it varies depending on the system, because too large an irradiation dose degrades the liquid crystal polymer.

An initiator may be used for inducing crosslinking after orientation. Although different initiators are used according to modes of crosslinking, it is desirable in any case to use an initiator which does not color the oriented film to a degree which may pose a problem in practical use. In the case where crosslinking is conducted by heating alone, it is necessary to use an initiator having a high decomposition temperature so as not to cause crosslinking during an orientation treatment. An explanation is given below on the case of ultraviolet crosslinking, which necessitates an initiator, among electromagnetic crosslinking techniques. Regardless of whether crosslinking is conducted by ultraviolet irradiation alone or by ultraviolet irradiation and simultaneous heating, use of an initiator which decomposes at the temperature used for orientation or crosslinking is undesirable and any initiator which decomposes upon irradiation with ultraviolet rays having a wavelength longer than 300 nm, at which the liquid crystal polymer shows absorption, can be used. Preferred examples the initiator include 2-benzyl-2-dimethylamino-1-(4-morpholinophenyl)butanone-1 and oligo[2-hydroxy-2-methyl-1-[4-(1-methylvinyl)phenyl]propane]. The amount of the initiator added also can be suitably determined.

Electromagnetic irradiation is preferably conducted in a manner so as to avoid crosslinking inhibition by oxygen. This can be accomplished by, for example, using an atmosphere having a reduced pressure or containing no oxygen. In the case of a heat treatment, crosslinking may be accomplished by heating the oriented layer at a suitable temperature which is higher than the glass transition temperature of the liquid crystal polymer and lower than the temperature at which the liquid crystal polymer comes to have an isotropic phase.

In the oriented film of the present invention, which can be obtained by the method described above, the side-chain type cholesteric liquid crystal polymer contained in the liquid crystal polymer composition has been crosslinked with the low molecular weight crosslinking agent while retaining monodomain orientation.

The oriented film of the present invention may have an appropriate constitution such as a multilayer structure comprising an appropriate substrate and formed thereon a layer of the oriented liquid crystal polymer or a single-layer film composed of a layer of the oriented liquid crystal polymer. The single-layer film made of a liquid crystal polymer can be obtained by forming the liquid crystal polymer layer on an oriented surface and peeling the layer from the surface. For facilitating the peeling from an oriented surface, a suitable technique can be employed according to need. Examples thereof include a technique in which a release agent having releasable side chains comprising, e.g., a long-chain alkyl group, is used in forming an oriented film through rubbing and a technique in which an oriented surface is formed on a glass plate having a surface modified by bonding thereto a silane compound having an alkyl chain with 8 to 18 carbon atoms.

On the other hand, in the case where the oriented film has a multilayer structure containing a substrate, the substrate may be an appropriate one such as a plastic film, a glass plate, a polymer sheet, or an optical film such a retardation film comprising a stretched film or a polarizing film. Examples of the plastic film include optionally stretched films of optically transparent, appropriate plastics such as poly(methyl methacrylate), polycarbonates, poly(vinyl alcohol), polyacrylates, polypropylene, other polyolefins and polystyrene. Especially desirable substrates are ones in which the retardation caused by birefringence is as small as possible, such as glass plates and triacetyl cellulose films.

The thickness of the liquid crystal polymer layer which has undergone orientation and crosslinking can be suitably determined, for example, according to optical properties required for the application in which the oriented film is to be used. However, from the standpoints of flexibility and others, the thickness thereof is generally 100 μm or smaller, preferably 50 μm or smaller, more preferably from 1 to 30 μm.

The oriented film of the present invention is useful as an optical film showing circular dichroism in various applications such as a color compensation film and a retardation film for liquid crystal displays, a cholesteric film and a notch filter.

The present invention will be explained in more detail below by reference to the following Examples which illustrate the constitutions and effects of the present invention.

EXAMPLE 1

(1) Synthesis of Low Molecular Weight Crosslinking Agent (having two acryloyl groups)

300 g of potassium hydroxide was dissolved in a mixture of 700ml of ethanol and 300ml of water. 276 g of

4-hydroxybenzoic acid and a catalytic amount of potassium iodide were dissolved in this solution. Thereafter, 177 g of ethylene chlorohydrin was gradually added the resulting solution under heating, and this mixture was refluxed for about 15 hours. The ethanol was removed from the resulting reaction mixture by distillation and the residue was added to 2 liters of water. This aqueous solution was washed twice with diethyl ether, and hydrochloric acid was added to the washed aqueous solution to make it acidic. The resulting precipitate was taken out by filtration, dried and recrystallized from ethanol to obtain 298 g of 4-(2-hydroxyethoxy)benzoic acid.

Subsequently, 18.2 g of the 4-(2-hydroxyethoxy)benzoic acid was dissolved in 300 ml of tetrahydrofuran. 19.5 g of vinyl acrylate, 18 g of lipase PS and a small amount of p-methoxyphenol were added to the resulting solution. This mixture was stirred at 40°C for 3 hours. The lipase PS was removed from the resulting reaction mixture by filtration and the filtrate was subjected to vacuum distillation. The residual solid was recrystallized from a 2:1 mixture of 2-butanone and hexane to obtain 17.5 g of 4-(2-propenoyloxyethoxy)benzoic acid.

9.44 g of the 4-(2-propenoyloxyethoxy)benzoic acid, 2.2 g of hydroquinone, a catalytic amount of dimethylaminopyridine and a small amount of butylhydroxytoluene were dissolved in 100 ml of methylene chloride. While stirring this solution at room temperature, a solution of 9.89 g of dicyclohexylcarbodiimide (DCC) in 10 ml of methylene chloride was gradually added thereto. This mixture was stirred at room temperature for 5 hours. Thereafter, the DCC-urea precipitated was removed by filtration, and the filtrate was washed with 0.5N HCl, saturated aqueous sodium hydrogen carbonate solution and saturated aqueous sodium chloride solution (twice) (each washing in an amount of 150 ml) and then dried with magnesium sulfate. After the magnesium sulfate was removed by filtration, the solvent was distilled off. The residue was purified by silica gel column chromatography (methylene chloride/diethyl ether = 25/1) to obtain 4.80 g (chemical purity: >97%) of a crosslinking agent having two acryloyl groups.

(2) synthesis of Monomer Containing Crosslinkable Group

Reaction Scheme 1:

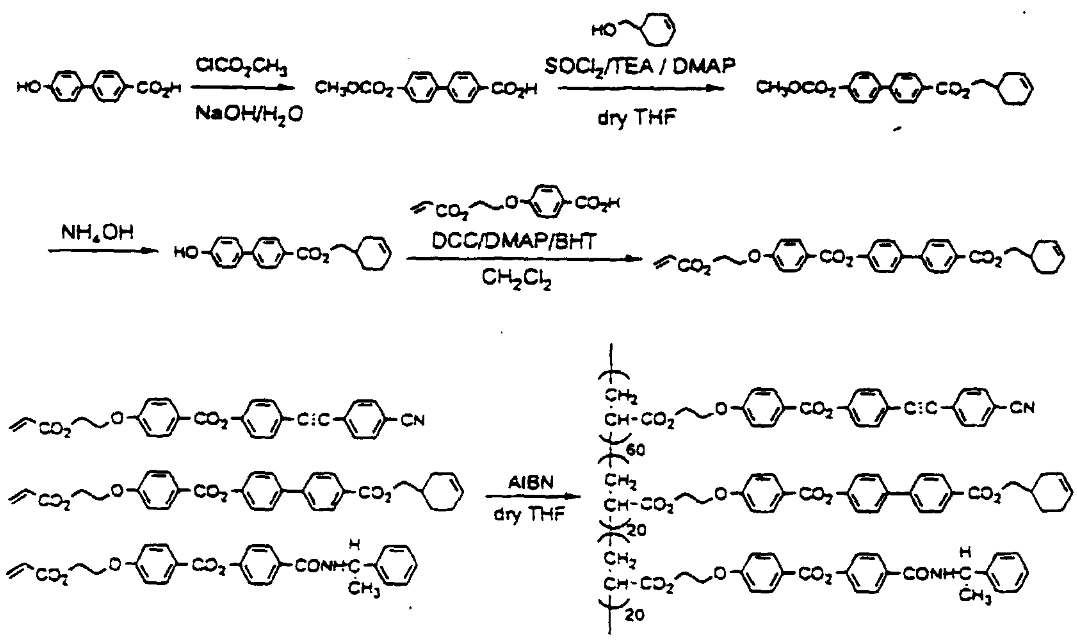


To a solution of 83.9 g of sodium hydroxide in 2 liters of water was added 139 g of 4-(4'-hydroxyphenyl)benzoic acid. On an ice bath, 91.1 ml of methyl chlorocarbonate was added dropwise to the mixture over 2 hours with stirring. After this reaction mixture was stirred at room temperature for 4 hours, about 70 ml of 12N HCl was added thereto to adjust the pH of the mixture to 2 to 3. The crystals precipitated were taken out by filtration, washed with water, subsequently vacuum-dried to remove the water, and then recrystallized from 1 liter of isopropanol to obtain 130 g (chemical purity: >99%) of 4-(4'-methoxycarbonyloxyphenyl)benzoic acid.

In 400 ml of chloroform were dissolved 55.5 g of the 4-(4'-methoxycarbonyloxyphenyl)benzoic acid and 1.5 ml of dimethylformamide. While stirring this solution in a nitrogen atmosphere, 19.3 ml of thionyl chloride was added

dropwise thereto at room temperature over 25 minutes. This mixture was stirred for 2 hours under heating at 40°C. The thionyl chloride remaining unreacted and the reaction solvent were distilled off, and the residue was dissolved in 20 ml of dry tetrahydrofuran (THF). Thereafter, the solvent was distilled off and the acid chloride was washed and then dissolved in 300 ml of dry THF. In 100 ml of dry THF were dissolved 25.2 g of 1-hydroxymethyl-3-cyclohexene, 22.7 g of triethylamine and a catalytic amount of dimethylaminopyridine. This solution was added dropwise to the acid chloride solution over 40 minutes on an ice bath in a nitrogen atmosphere. Subsequently, the ice bath was removed, and the reaction mixture was stirred overnight at room temperature. The triethylamine hydrochloride precipitated was removed by filtration, and about three-fourths the THF was removed from the filtrate by distillation. To the residual filtrate was added 300 ml of methylene chloride. This organic layer was washed with saturated aqueous sodium hydrogen carbonate solution, 2N aqueous HCl solution and saturated aqueous sodium chloride solution (each in an amount of 300 ml) and then dried with magnesium sulfate. Thereafter, the solvent was distilled off and the residue was purified by silica gel column chromatography to obtain 81.6 g (chemical purity: >99%) of 3-cyclohexenylmethyl 4-(4'-methoxycarbonyloxyphenyl)benzoate.

In 700 ml of THF were dissolved 81.6 g of the 3-cyclohexenylmethyl 4-(4'-methoxycarbonyloxyphenyl)benzoate and 70 ml of 25% ammonia water. This solution was stirred at room temperature for 1 hour and then neutralized with 12N HCl. The resulting ammonium chloride was removed by filtration, and the THF was removed from the filtrate by distillation. To the residue was added 1 liter of methylene chloride. This solution was washed twice with water (1 liter) and then dried with magnesium sulfate. Thereafter, the solvent was distilled off to obtain 52.5 g (chemical purity: 95%) of 3-cyclohexenylmethyl 4-(4'-hydroxyphenyl)benzoate.

To 1 liter of methylene chloride were added 52.5 g of the 3-cyclohexenylmethyl 4-(4'-hydroxyphenyl)benzoate, 42.2 g of 4-(2-propenoyloxyethoxy)benzoic acid, a small amount of butylhydroxytoluene and a catalytic amount of dimethylaminopyridine. While stirring this mixture on a water bath, a solution of 38.6 g of dicyclohexylcarbodiimide in 50 ml of methylene chloride was added dropwise thereto over 40 minutes. Thereafter, the water bath was removed and the reaction mixture was stirred overnight at room temperature. The urea precipitated was removed by filtration, and 1 liter of methylene chloride was added to the filtrate. This solution was washed with saturated aqueous sodium hydrogen carbonate solution, 0.5N HCl, and saturated aqueous sodium chloride solution (each washing in an amount of 1 liter) and then dried with magnesium sulfate. Thereafter, the solvent was distilled off and the residue was recrystallized from 2 liters of isopropanol. Thus, 58.5 g (chemical purity: 98.5%) of 4'-[(3''-cyclohexenyl)methoxycarbonyl]biphenyl 4-(2-propenoyloxyethoxy)benzoate was obtained.

(3) Synthesis of Liquid Crystal Polymer

In a nitrogen atmosphere, 5.00 g of the monomer shown in the reaction scheme 1 above imparting the nematic orientation property, 1.61 g of the monomer shown in the reaction scheme 1 containing an optically active group and 1.99 g of the monomer obtained in (2) above containing a crosslinkable group were dissolved with heating at 57°C in a mixed solvent of dimethylacetamide and tetrahydrofuran in a weight ratio of 4/1. A solution of 0.155 g of azobisisobutyronitrile in a small amount of the reaction solvent was added dropwise to the reaction mixture, which was then stirred for 6 hours. The resulting reaction mixture was poured into 1 liter of methanol to precipitate a polymer. This polymer was washed with a mixed solvent of methanol and tetrahydrofuran in a weight ratio of 3/2 with rubbing, and then vacuum-dried to obtain 6.88 g of the objective liquid crystal polymer.

(4) Preparation of Oriented Film

The liquid crystal polymer containing terminal cyclohexenyl groups obtained in (3) above was dissolved in cyclohexanone to obtain a 30 wt% solution. The crosslinking agent having two acryloyl groups obtained in (1) above was added to the solution in an amount of 10 parts by weight per 100 parts by weight of the liquid crystal polymer to prepare a solution.

Subsequently, the solution prepared above was applied with a spin coater to a stretched PET film laminated to a glass plate. The coating film was dried, heated at 160°C for 5 minutes to orient the liquid crystal polymer, cooled to room temperature, and then irradiated with electron beams in a dose of 40 Mrad to crosslink the liquid crystal polymer. Thus, an oriented film was obtained.

EXAMPLE 2

(1) Synthesis of Monomer Containing Crosslinkable Group

Reaction Scheme 2

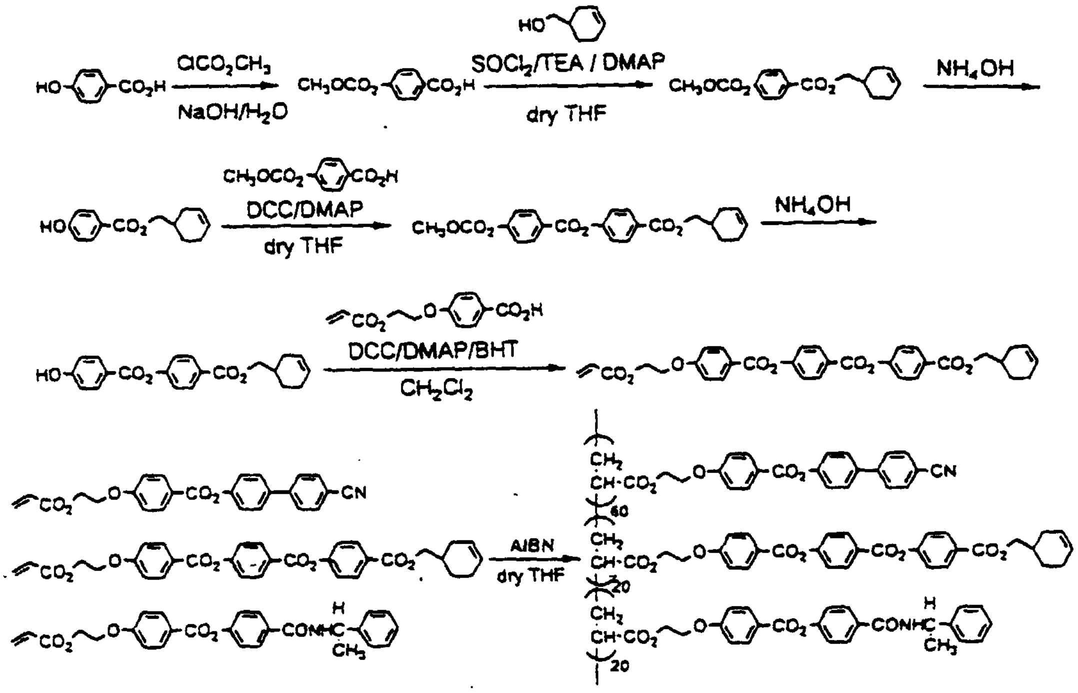


To a solution of 83.9 g of sodium hydroxide in 2 liters of water was added 100 g of 4-hydroxybenzoic acid. On an ice bath, 91.1 ml of methyl chlorocarbonate was dropwise added to the mixture over 2 hours with stirring. The ice bath was removed and this reaction mixture was stirred at room temperature for 4 hours. Thereafter, about 70 ml of 12N HCl was added thereto to adjust the pH of the mixture to 2 to 3. The crystals precipitated were taken out by filtration, washed with water, subsequently vacuum-dried to remove the water, and then recrystallized from 1 liter of isopropanol to obtain 94.0 g (chemical purity: >99%) of 4-methoxycarbonyloxybenzoic acid.

In 400 ml of chloroform were dissolved 40.0 g of the 4-methoxycarbonyloxybenzoic acid and 1.5 ml of dimethylformamide. While stirring this solution in a nitrogen atmosphere, 19.3 ml of thionyl chloride was added dropwise thereto at room temperature over 25 minutes. This mixture was stirred for 2 hours with heating at 40°C. The thionyl chloride remaining unreacted and the reaction solvent were distilled off, and the residue was dissolved in 20 ml of dry THF. Thereafter, the solvent was distilled off and the acid chloride was washed and then dissolved in 300 ml of dry THF. In 100 ml of dry THF were dissolved 25.2 g of 3-cyclohexene-1-methanol, 22.7 g of triethylamine and a catalytic amount of dimethylaminopyridine. This solution was added dropwise over 40 minutes to the acid chloride solution on an ice bath in a nitrogen atmosphere. Subsequently, the ice bath was removed, and the reaction mixture was stirred overnight at room temperature. The triethylamine hydrochloride precipitated was removed by filtration, and about three-fourths the THF was removed from the filtrate by distillation. To the residual filtrate was added 300 ml of methylene chloride. This organic layer was washed with saturated aqueous sodium hydrogen carbonate solution, 2N aqueous HCl solution, and saturated aqueous sodium chloride solution (each washing in an amount of 300 ml) and then dried with magnesium sulfate. Thereafter, the solvent was distilled off and the residue was purified by silica gel column chromatography to obtain 58.8 g (chemical purity: >99%) of 3-cyclohexenylmethyl 4-methoxycarbonyloxybenzoate.

In 700 ml of THF were dissolved 58.8 g of the 3-cyclohexenylmethyl 4-methoxycarbonyloxybenzoate and 70 ml of 25% ammonia water. This solution was stirred at room temperature for 1 hour and then neutralized with 12 N HCl. The resulting ammonium chloride was removed by filtration, and the THF was removed from the filtrate by distillation. To the residue was added 1 liter of methylene chloride. This solution was washed twice with water (1 liter) and then dried with magnesium sulfate. Thereafter, the solvent was distilled off to obtain 52.5 g (chemical purity: 95%) of 3-cyclohexenylmethyl 4-hydroxybenzoate.

To 330 ml of methylene chloride were added 14.8 g of the 4-methoxycarbonyloxybenzoic acid, 18.4 g of the 3-cyclohexenylmethyl 4-hydroxybenzoate and a catalytic amount of dimethylaminopyridine. While stirring this mixture on a water bath, a solution of 17.1 g of dicyclohexylcarbodiimide in 20 ml of methylene chloride was added dropwise thereto over 10 minutes. Thereafter, the water bath was removed and the reaction mixture was stirred at room temperature for 30 minutes. The urea precipitated was removed by filtration, and 400 ml of methylene chloride was added to the filtrate. This solution was washed with saturated aqueous sodium hydrogen carbonate solution, 0.5N HCl and saturated aqueous sodium chloride solution (each washing in an amount of 1 liter) and then dried with magnesium sulfate. Thereafter, the solvent was distilled off to obtain 34.1 g (chemical purity: 88%) of p-(3-cyclohexenyl)methoxycarbonylphenyl 4-methoxycarbonyloxybenzoate.

In 500 ml of THF were dissolved 34.1 g of the p-(3-cyclohexenyl)methoxycarbonylphenyl 4-methoxycarbonyloxybenzoate and 50 ml of 25% ammonia water. This solution was stirred at room temperature for 1 hour and then neutralized with 12N HCl. The resulting ammonium chloride was removed by filtration, and the THF was removed from the filtrate by distillation. To the residue was added 1 liter of methylene chloride. This solution was washed twice with water (1 liter) and then dried with magnesium sulfate. Thereafter, the solvent was distilled off to obtain 27.7 g (chemical purity: 93%) of p-(3-cyclohexenyl)methoxycarbonyl-phenyl 4-hydroxybenzoate.

To 500 ml of methylene chloride were added 27.3 g of the p-(3-cyclohexenyl)methoxycarbonylphenyl 4-hydroxybenzoate, 19.2 g of 4-(2-propenoyloxyethoxy)benzoic acid, a small amount of butylhydroxytoluene and a catalytic amount of dimethylaminopyridine. While stirring this mixture on a water bath, a solution of 17.6 g of dicyclohexylcarbodiimide in 30 ml of methylene chloride was added dropwise thereto over 20 minutes. Thereafter, the water bath was removed and the reaction mixture was stirred overnight at room temperature. The urea precipitated was removed by filtration, and 500 ml of methylene chloride was added to the filtrate. This solution was washed with saturated aqueous sodium hydrogen carbonate solution, 0.5N HCl and saturated aqueous sodium chloride solution (each washing in an amount of 1 liter) and then dried with magnesium sulfate. Thereafter, the solvent was distilled off and the residue was recrystallized from 700 ml of isopropanol. Thus, 24.6g (chemical purity: 98.9%) of p-[(3-cyclohexenyl)methoxycarbonyl]phenoxycarbonylphenyl 4-(2-propenoyloxyethoxy)benzoate was obtained.

(2) Synthesis of Liquid Crystal Polymer

In a nitrogen atmosphere, 4.00 g of the monomer shown in the reaction scheme 2 above imparting the property of undergoing nematic orientation, 1.48 g of the monomer shown in the reaction scheme 2 containing an optically active group, and 1.84 g of the monomer obtained in (1) above containing a crosslinkable group were dissolved with heating at 57°C in a mixed solvent of dimethylacetamide and tetrahydrofuran in a weight ratio of 4/1. A solution of 0.122 g of azobisisobutyronitrile in a small amount of the reaction solvent was added dropwise to the reaction mixture, which was then stirred for 6 hours. The resulting reaction mixture was poured into 1 liter of methanol to precipitate a polymer. This polymer was washed with a mixed solvent of methanol and tetrahydrofuran in a weight ratio of 3/2 with rubbing, and then vacuum-dried to obtain 5.83 g of the objective liquid crystal polymer.

(3) Preparation of Oriented Film

An oriented film which had undergone orientation and crosslinking was obtained in the same manner as in Example 1, except that the liquid crystal polymer obtained in (2) above was used.

COMPARATIVE EXAMPLE 1

An oriented film was obtained in the same manner as in Example 1, except that the irradiation with electron beams was omitted.

COMPARATIVE EXAMPLE 2

An oriented film was obtained in the same manner as in Example 1, except that the crosslinking agent having two acryloyl groups was not added.

COMPARATIVE EXAMPLE 3

An oriented film was obtained in the same manner as in Example 2, except that the irradiation with electron beams was omitted.

EVALUATION TEST

Each of the oriented films obtained in the Examples and Comparative Examples was bonded to a polarizing film (G1220DU, manufactured by Nitto Denko Corp.) through an acrylic pressure-sensitive adhesive having a thickness of 20 μm. The resulting laminates were heated at various temperatures for 1 hour and then visually examined for any change in appearance. The highest temperature at which no change was observed was taken as heat resistance temperature. The results obtained are shown in the Table below.

Table

| | Example | | Comparative Example | | |
|---|---|---|---|---|---|
| | 1 | 2 | 1 | 2 | 3 |
| Heat resistance temperature (°C) | 100 | 100 | 70 | 75 | 70 |

The Table shows that the oriented films obtained in the Examples had a greatly improved heat resistance temperature due to the crosslinking treatment. The fact that reaction occurs between the liquid crystal polymer and the low molecular weight crosslinking agent in the crosslinking treatment is apparent from, for example, the fact that heat resistance is not almost improved in the film of Comparative Example 2 to which the crosslinking agent having two acryloyl groups was not added.

The present invention has the following effects. The liquid crystal polymer having at least one crosslinkable group at a side-chain terminal can be synthesized by merely polymerizing monomers for constituting the respective segments. The liquid crystal polymer can be oriented by preparing a solution of the polymer, applying and drying the solution, heating the resulting coating film to a temperature of the glass transition temperature or higher of the polymer, and then cooling the coating film. Furthermore, the oriented layer can be made to have improved heat resistance, without disordering the orientation, by crosslinking the liquid crystal polymer under practical conditions with the low molecular weight crosslinking agent containing one or more (meth)acryloyl groups. Consequently, not only an orientation treatment can be conducted at low temperature as in the orientation of conventional cholesteric liquid crystal polymers, but also a large oriented film having excellent heat resistance can be produced easily and efficiently. In addition, the (meth)acryloyl-containing, low molecular weight crosslinking agent used in the present invention is characterized by causing almost no coloration.

**Claims**

1. A liquid crystal polymer composition comprising a side-chain type cholesteric liquid crystal polymer having as repeating units a segment represented by the following formula (I), a segment having an optically active group and a segment imparting nematic orientation property, and a low molecular weight crosslinking agent having one or more (meth)acryloyl groups in the molecule:

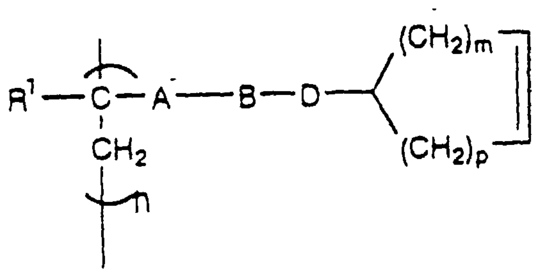

(I)

wherein $R^1$ represents hydrogen atom or a methyl group; A, B and D each represent an organic group; $1 \leq n \leq 100$; and $0 \leq m+p \leq 10$ .

2. The liquid crystal polymer composition as claimed in claim 1, wherein the organic group A is an organic group represented by the following formula:

$$Z^1(CH_2)_YR^2Z^2$$

wherein $Z^1$ and $Z^2$ which may be the same or different each represent a group selected from the group consisting of -COO-, -O-, -OCO-and $-(CH_2)_K-$ wherein K is an integer of 0 to 6; Y is an integer of 0 to 12; and $R^2$ represents an organic group represented by the following formula (II):

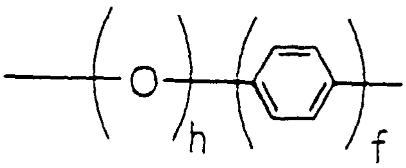

(II)

wherein h is 0 when Y=0 and h is 1 when Y=$1 \leq Y \leq 12$ ; and f is 1 or 2;
the organic group B is a para-substituted cyclic organic group; and the organic group D is an organic group represented by the following formula:

$$Z^3(CH_2)_XZ^4$$

wherein when X=0, $Z^3$ is $-(CH_2)_L-$ (wherein L is an integer of 0 to 6) and $Z^4$ is -COO-, -O-, -OCO- or $-(CH_2)_N-$ (wherein N is an integer of 0 to 6); and when $1 \leq X \leq 10$, $Z^3$ and $Z^4$ which may be the same or different each represent -COO-, -O-, -OCO- or $-(CH_2)_N-$ (wherein N is an integer of 0 to 6).

**3.** An oriented film formed from the liquid crystal polymer composition as claimed in claim 1, wherein the side-chain type cholesteric liquid crystal polymer contained in the composition is crosslinked with the low molecular weight crosslinking agent while retaining monodomain orientation.

**4.** A process for producing an oriented film which comprises orienting the liquid crystal polymer composition as claimed in claim 1 and crosslinking the liquid crystal polymer by at least one of electromagnetic irradiation and heating.